# EUROPEAN PATENT APPLICATION

(11) **EP 2 982 534 A1**
(43) Date of publication of application: **10.02.2016**
(21) Application number: 13881245.8
(22) Date of filing: 01.04.2013
(51) Int. Cl.: B60K 35/00

(54) **DISPLAY SYSTEM**

(71) Applicant: Pioneer Corporation, Kawasaki-shi, Kanagawa 212-0031 (JP); Tohoku Pioneer Corporation, Tendo-shi, Yamagata 994-8585 (JP)
(72) Inventor: SATO, Nobuyuki, Tendo-shi Yamagata 994-8585 (JP)
(74) Representative: Grünecker Patent- und Rechtsanwälte PartG mbB
(86) International application number: PCT/JP2013/059978
(87) International publication number: WO 2014/162477

(57) **Abstract**

Provided is a low-cost display system with a small-sized shutter shielding an opening portion in an accommodation state. In a display system in which a display device (210) displaying an image is located at different positions as a use position and an accommodation position, the display system includes a first shutter (231) and a second shutter (232) which are formed so that opening portions are wider than the display device. Here, when the display device is located at the use position, at least a part of the display device is located near the front surface of the first shutter (231) and the second shutter (232) and at least one of the first shutter (231) and the second shutter (232) is closed.

## Description

### [Technical Field]

The present invention relates to a display system. Specifically, the present invention relates to a display system of, for example, a head-up display (HUD) device.

### [Background Art]

Hitherto, there is known a head-up display including a combiner and an indicator provided separately from a front glass. Here, a display device (a combiner) including a half mirror and the like is disposed on a surface of an instrument panel (a dashboard), and a beam is projected from the indicator such as a liquid-crystal indicator to the combiner located near a driver in relation to the front glass, so that a virtual image is displayed by the combiner.

It is desirable to accommodate the combiner in a non-use state. As such a head-up display, a so-called pop-up display is disclosed in which the combiner is laid in an accommodation state and the combiner is raised in a use sate so that an image is displayed on the combiner (see Patent Literature 1).

In a combiner system, the combiner is accommodated in a case in a laid state while a shutter is closed, and the combiner is raised so as to protrude from an opening portion when the shutter is opened. Since the opening portion having a large area is formed when the combiner is popped up, a shutter (a cover) opening and closing the opening portion is provided on the surface of the combiner system that accommodates the combiner in order to guarantee a beautiful appearance or to prevent the generation of dust.

### [Citation List]

### [Patent Literature]

[PTL 1]
Patent Literature 1: JP 11-91403 A

### [Summary of Invention]

### [Technical Problem]

In the pop-up combiner, the combiner which is accommodated in the combiner system in the accommodation state is raised to a position where the display is easily viewed in the use state. In a structure in which the combiner is raised while rotating from the accommodation position to the use position, the area of the opening portion needs to be equal to or larger than the area of the combiner, and hence the shutter (the cover) covering the opening portion is further demanded. However, a large drive mechanism needs to be provided in order to drive the shutter larger than the combiner. As a result, the device increases in size and cost.

In order to decrease the size of the opening portion, the combiner needs to be moved in the vertical direction. However, the downward protrusion distance increases, and hence an allowable space is not ensured in the dashboard to be equipped with a duct of an air - conditioner and the like. For this reason, it is desirable to dispose the combiner in the horizontal direction in the accommodation state.

Here, an object of the present invention is to provide a low-cost combiner system in which a combiner is disposed in the horizontal direction in the accommodation state and is raised in the vertical direction in the use state and a shutter shielding an opening portion in the accommodation state is small in size.

### [Solution to Problem]

To solve the above problem and achieve the above object, a display system of the present invention is configured such that a display device displaying an image is located at different positions as a use position and an accommodation position, and the display system includes: first and second shutters which are formed so that opening portions are wider than the display device, and at least a part of the display device is located above the first and the second shutters and at least one of the first and the second shutters is closed when the display device is located at the use position.

### [Brief Description of Drawings]

[Fig. 1]

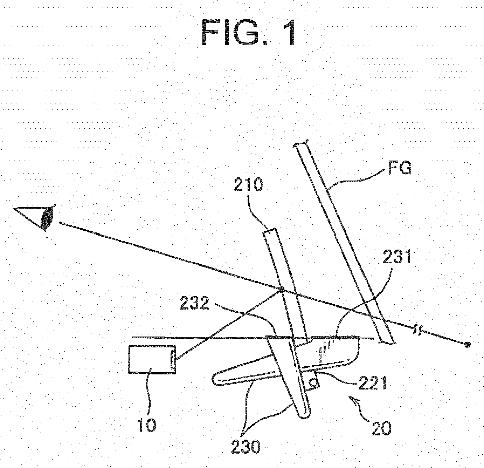

   Fig. 1 is a schematic diagram illustrating a head-up display equipped with a combiner system (a display system) according to an embodiment of the present invention.
[Fig. 2]

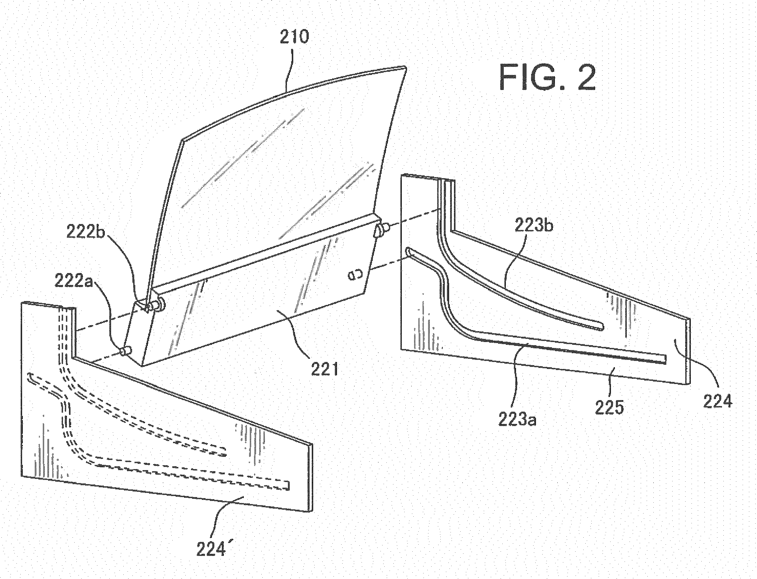

   Fig. 2 is a schematic diagram illustrating a combiner and a pop-up mechanism of the combiner system according to the embodiment of the present invention.
[Fig. 3]

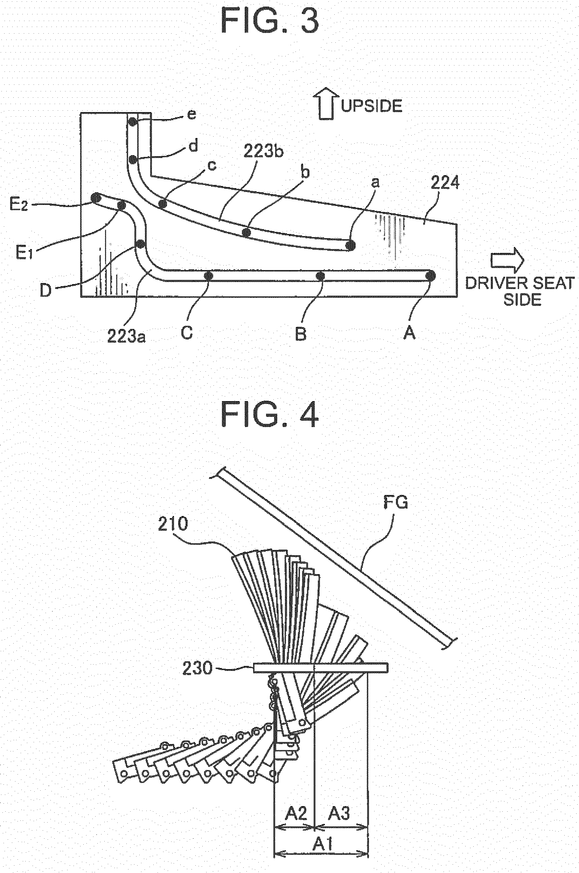

   Fig. 3 is a front view of a guide member of the combiner system according to the embodiment of the present invention.
[Fig. 4]
   Fig. 4 is a schematic diagram illustrating a trace of the combiner when the combiner moves from an accommodation position to a use position in the combiner system according to the embodiment of the present invention.
[Fig. 5]

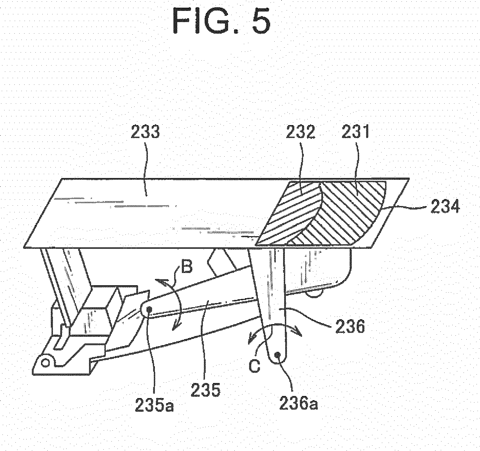

   Fig. 5 is a schematic perspective view in which only a shutter assembly (an opening/closing shutter) and a peripheral member thereof are extracted from the combiner system according to the embodiment of the present invention.
[Fig. 6]

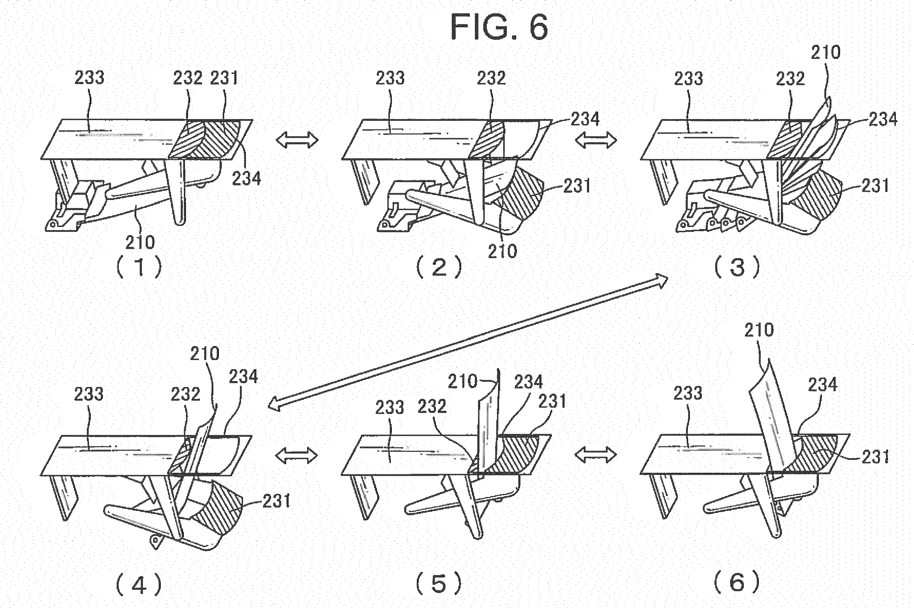

   Fig. 6 is a schematic diagram illustrating the movement of the shutter assembly in respective steps when the combiner moves between the accommodation position and the use position in the combiner system according to the embodiment of the present invention.
[Fig. 7]

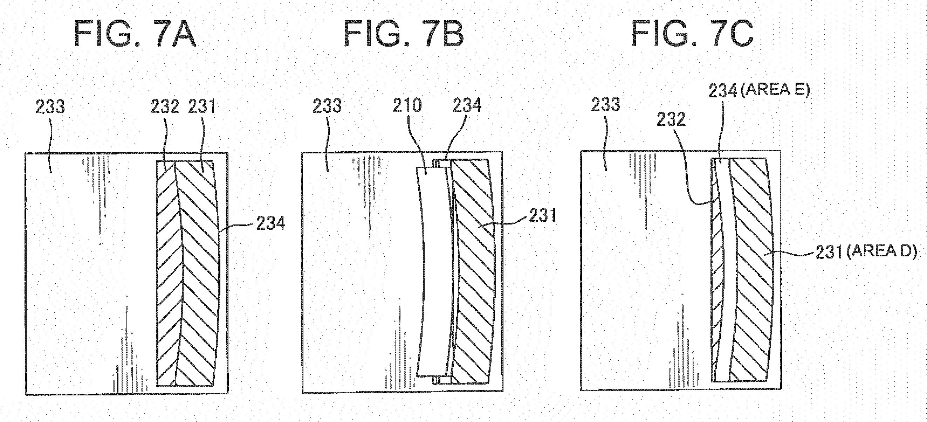

   Figs. 7A to 7C are top views illustrating examples of an opening/closing state of the shutter assembly in the combiner system according to the embodiment of the present invention.

### [Description of Embodiments]

Hereinafter, a display system (a combiner system) according to an embodiment of the present invention will be described. The display system according to the embodiment of the present invention is formed so that a display device displaying an image is located at different positions as a use position and an accommodation position. Since the display device moves to a position which is not seen from a user, a beautiful appearance is desirably guaranteed. Further, the display system according to the embodiment of the present invention includes first and second shutters which are formed so that opening portions between the use position and the accommodation position are wider than the display device, wherein at least a part of the display device is located above the first and the second shutters and at least one of the first and the second shutters is closed when the display device is located at the use position. Accordingly, the opening portion which is not necessary in the use state of the display device is narrowed. As a result, a beautiful appearance is guaranteed and the generation of dust is prevented in a desirable way.

Further, since the opening portions of the first and the second shutters are formed so that the opening portion of the first shutter is continuous to the opening portion of the second shutter, the unnecessary opening portion can be precisely narrowed by the interlocked movement.

Further, since the second shutter is opened and a part of the display device is located at the opening portion of the second shutter when the display device is located at the use position, the opening portion can be flexibly controlled.

Further, since the display device is uprightly installed in the substantially vertical state when the display device is located at the use position, the user can easily use the display device.

Then, since the first shutter is closed when the display device is located at the use position, the unnecessary opening portion can be shielded in the use state.

Further, since the opening/closing direction of the first and the second shutters is substantially perpendicular to the upright installation direction of the display device when the display device is located at the use position, the opening portion necessary for the movement of the display device can be ensured by little movement of the shutter.

Since the first and the second shutters are closed when the display device is located at the accommodation position, a beautiful appearance is guaranteed and the generation of dust is prevented in a desirable way.

Further, since the display device is located below the first shutter and the second shutter when the display device is located at the accommodation position, the display device does not disturb the eye sight when the display system is not used.

Further, since the display device is accommodated while being laid in the substantially horizontal direction when the display device is located at the accommodation position, the display device can be attached to a place of which the empty space is narrowed downward.

Further, since the first shutter is opened earlier than the second shutter when the display device moves from the accommodation position to the use position, a needless space is not included in the space necessary for the movement of the display device.

Further, since the second shutter is closed earlier than the first shutter when the display device moves from the use position to the accommodation position, a needless space is not included in the space necessary for the movement of the display device.

Further, since at least one of the first shutter and the second shutter is opened and closed by rotating about a predetermined shaft, the shutter can be easily driven.

Further, since the display device is a combiner which reflects a beam projected to a visible-side surface toward a user so that an image depicted by the beam is projected to the user's eye sight, the user can see a virtual image through the combiner.

Further, since the display device is a combiner which reflects a beam projected to a visible-side surface toward a driver seat so that an image depicted by the beam is projected to an eye sight of a user sitting on the driver seat, a driver can see both an outside scenery and a virtual image formed by the combiner when the display system according to the present invention is attached to a mobile object such as a vehicle.

### [Example]

A display system (a combiner system) according to an embodiment of the present invention will be described with reference to the drawings.

Fig. 1 is a schematic diagram illustrating a head-up display equipped with the combiner system according to the embodiment of the present invention. Fig. 1 illustrates a state where a combiner is exposed from a dashboard so as to be raised in the substantially vertical direction and is located at a position (a use position) where a user sitting on a driver seat of a vehicle uses the combiner system.

A head-up display I of Fig. 1 is configured to superimpose various information items such as a navigation information item on an outside scenery in front of a front glass FG so that the user sitting on the driver seat of the vehicle visually recognizes various information items, and includes an indicator 10, a combiner system 20, and an operation unit (not illustrated). Further, the combiner system 20 includes a combiner 210, a shutter assembly 230, and a pop-up mechanism 220 not illustrated in Fig. 1.

The indicator 10 projects a beam depicting an image representing various information items such as a navigation information item toward a visible-side surface of the combiner 210 of the combiner system 20.

The combiner 210 is an existing half mirror in which a semi-transmissive film of tin or silver is deposited on a recessed surface of a curved transparent resin plate and the recessed surface is used as a reflection surface (a visible-side surface) 210a. At the use position illustrated in Fig. 1, the combiner 210 is held while being raised on the horizontal plane so that the recessed surface is directed toward the indicator 10 and the user.

The combiner 210 reflects a beam projected from the indicator 10 toward the user by the reflection surface 210a so that an image representing various information items such as a navigation information item depicted by the beam is projected to the user's eye sight. As described above, since the combiner 210 is the half mirror, a passenger visually recognizes the projected image over the combiner 210 while the projected image is superimposed as a virtual image on the outside scenery in front of the front glass FG. Further, since the combiner 210 is curved, the user visually recognizes the image which is raised and widened at the front position of about 2 to 3 m.

Fig. 2 is a schematic diagram illustrating the combiner 210 and the pop-up mechanism 220 of the combiner system 20.

As illustrated in Fig. 2, the combiner 210 has a shape in which a substantially rectangular plate is curved in the up/down direction and the left/right direction. In the use state, the lower end of the combiner 210 is attached and held by the combiner holding member 221. In the use state, a columnar protrusion-shaped drive pin 222a is provided in the vicinity of the lower end of the combiner holding member 221 in the up/down direction so as to protrude from each of the left and right surfaces, and a posture pin 222b having the same shape is provided in the vicinity of the upper end so as to protrude from each of the left and right surfaces. Here, the pair of pins provided at the left and right sides of the combiner holding member 221 is located at the same position in the height direction.

A pair of guide members 224 and 224' is disposed at both left and right sides of the combiner holding member 221. Each of the opposed surfaces of the pair of guide members 224 and 224' is provided with a drive rail 223a and a posture rail 223b which are formed in a groove shape. When the drive pin 222a and the posture pin 222b move inside the drive rail 223a and the posture rail 223b while being respectively fitted to the drive rail 223a and the posture rail 223b, the combiner 210 held by the combiner holding member 221 moves while changing the posture thereof.

Fig. 3 is a front view of a surface provided with the rail of the right guide member 224 directed toward the reflection surface 210a of the combiner 210. The drive pin 222a is driven by a drive unit (not illustrated) so as to move inside the drive rail 223a. Here, the distance between the drive pin 222a and the posture pin 222b is fixed. Accordingly, when the drive pin 222a moves inside the drive rail 223a, the posture pin 222b moves to a position inside the posture rail 223b held to keep the distance therebetween constant in response to the movement. Then, the position and the posture of the combiner 210 change in response to a positional relation therebetween. Then, the combiner 210 moves between the use position and the accommodation position. The movement process will be described with reference to Fig. 3.

First, the drive pin 222a is located at the point A as the driver seat side end of the drive rail 223a and the posture pin 222b is similarly located at the point a as the driver seat side end of the posture rail 223b in an accommodation state where the combiner 210 is accommodated in the accommodation position. At the position, the combiner 210 is laid in the substantially horizontal direction at the accommodation position lower than the use position and close to the driver seat so that the combiner is accommodated in the combiner accommodation portion. The combiner accommodation portion is located at a place where the entire periphery including the upper part of the combiner 210 is covered and protected inside the dashboard.

When the drive pin 222a is moved inside the drive rail 223a toward the front glass by the drive unit (not illustrated), the reflection surface 210a directed upward is gradually inclined toward the driver seat while the combiner 210 moves backward from the driver seat toward the front glass. For example, when the drive pin 222a is located at the point B, the posture pin 222b is located at the point b and the reflection surface 210a of the combiner 210 is slightly inclined toward the driver seat.

When the drive pin 222a is further moved to the point C, the posture pin 222b is located at the point c, and the reflection surface 210a of the combiner 210 is further inclined toward the driver seat. Here, the further movement causes the combiner 210 to move upward. When the drive pin 222a reaches the point D, the posture pin 222b is located at the point d, and the reflection surface 210a of the combiner 210 is substantially directed toward the driver seat. Here, the further movement causes the combiner 210 to move upward while the angle of the reflection surface 210a of the combiner 210 is maintained.

Then, when the drive pin 222a reaches the point E1, the posture pin 222b is located at the point e, and the reflection surface 210a of the combiner 210 is exposed onto the dashboard so as to be disposed in the substantially vertical direction toward the driver seat.

The shape of the drive rail 223a between the point E1 and the point E2 is formed as a circular-arc shape about the point e as the axis. Here, when the drive pin 222a moves between the point E1 and the point E2, the posture pin 222b is continuously located at the point e, and the drive pin 222a rotates about the point e as the axis, so that the angle of the reflection surface 210a of the combiner 210 changes in the up/down direction. Since the user has a different eye position (the front/back direction and the height direction) depending on the body shape, the driving posture, and the driving position, the user can adjust the angle of the reflection surface 210a of the combiner 210 to a position best suitable for the user by appropriately selecting the position of the drive pin 222a between the point E1 and the point E2.

While the sequence of the movement of the combiner 210 from the accommodation position to the use position has been described with reference to Fig. 3, the movement from the use position to the accommodation position is accurately the movement in the reverse direction, and the description thereof will not be presented.

The drive unit that moves the drive pin 222a inside the drive rail 223a is not particularly limited, and an existing method or various drive units devised to carry out the present invention can be appropriately employed. For example, the drive pin 222a may be driven in a manner such that a wire is connected to the lower end of the combiner 210 or the vicinity thereof and is wound from the driver seat or the front glass FG. Alternatively, the drive pin 222a may be directly driven in a manner such that an external tooth gear is provided in the drive pin 222a and a gear (a combination of a straight gear, an external tooth gear, and an internal tooth gear) engaging with the external tooth gear extends along the drive rail 223a.

In addition, as the angle of the reflection surface 210a of the combiner 210, the entire adjustment range of appropriately selecting the position of the drive pin 222a between the point E1 and the point E2 is included in the scope of the "substantially vertical state" and the "substantially driver seat directed state" mentioned in the present invention.

Fig. 4 is a schematic diagram illustrating a trace of the combiner 210 when the combiner 210 moves from the accommodation position to the use position in the combiner system 20 of the embodiment when viewed from the right side toward the reflection surface 210a of the combiner 210. As illustrated in Fig. 4, the moving front end (the upper end in the use state) of the combiner 210 is first raised while moving a space near the front glass FG so that the combiner is disposed so as to be in the substantially vertical state at the use position near the driver seat. For that reason, there is a need to open an area indicated by A1 of Fig. 4 when the combiner 210 moves from the accommodation position to the use position. Accordingly, when a shutter covering the opening is provided, the shutter needs to be equal to or larger than the opening.

However, it is desirable to open an area indicated by A2 of Fig. 4 and not to open an area indicated by A3 near the front glass FG in consideration of the adjustment of the angle of the reflection surface 210a of the combiner 210 in the use state. Although it is intended to suppress the intrusion of external dust, the position is an area which is directly exposed to the sunlight entering from the front glass FG. Thus, it is desirable not to open the area indicated by A3 in order to protect various components of the combiner system 20 located inside the dashboard or the other components from the UV ray of the sunlight. For that reason, in the embodiment, the shutter assembly (the opening/closing shutter) 230 includes two shutters, that is, a first shutter opening and closing the area indicated by A2 in Fig. 4 and a second shutter opening and closing the area indicated by A3 in Fig. 4.

That is, since the shutter assembly 230 includes two shutters, that is, the first shutter located near the front glass FG in relation to the combiner 210 and the second shutter located at the lower portion of the combiner 210 when the combiner 210 is located at the use position and both shutters are independently and appropriately opened and closed, the shutter assembly can be opened and closed appropriately. That is, according to the configuration of the embodiment, an area other than a necessary area is shielded when the combiner 210 is located at the use position (the use state), a necessary area is opened when the combiner moves between the use position and the accommodation position (the moving state), and all openings are shielded when the combiner is located at the accommodation position (the accommodation state and the housed state).

The shutter assembly 230 will be described in detail with reference to Figs. 5 to 7. Fig. 5 is a schematic perspective view illustrating a state where only the shutter assembly 230 and the peripheral component are extracted from the combiner system 20 of the embodiment. Fig. 5 illustrates the shutter assembly when the combiner 210 is located at the accommodation position and the shutter assembly is closed. As illustrated in Fig. 5, a dashboard surface 233 is provided with an opening portion 234 through which the combiner 210 appears in a retractable manner, and the shutter assembly 230 for opening and closing the opening portion 234 includes a first shutter 231 and a second shutter 232.

In a closed state, the first shutter 231 is located near the front glass FG in relation to the combiner 210 when the combiner 210 is located at the use position (in the state illustrated in Fig. 1). The lower portion of the first shutter 231 is connected to the other end of a first arm 235 of which one end is rotatably fixed to the vehicle by a shaft 235a parallel to the center of the reflection surface (the visible-side surface) 210a, and the first arm 235 rotates about the shaft 235a in the direction of the arrow B, so that the area (hereinafter, referred to as the "area D") near the front glass FG of the opening portion 234 is opened and closed by the first shutter 231.

Meanwhile, the second shutter 232 is located at the lower portion of the combiner 210 when the combiner 210 is located at the use position (the state illustrated in Fig. 1). The lower portion of the second shutter 232 is connected to the other end of a second arm 236 of which one end is rotatably fixed to the vehicle by a shaft 236a, and the second arm 236 rotates about the shaft 236a in the direction of the arrow C, so that the area (hereinafter, referred to as the "area E") near the driver seat of the opening portion 234 is opened and closed by the second shutter 232.

The first arm 235 and the second arm 236 which respectively open and close the first shutter 231 and the second shutter 232 may be driven by an existing method. For example, a configuration may be employed in which an external tooth gear is attached to the shaft 235a or the shaft 236a and is rotated by a power generation device for rotating and driving the first and second arms 235 and 236. Next, a process of opening and closing the shutter assembly 230 will be described. First, a process in which the combiner 210 moves from the accommodation position to the use position will be described.

Figs. 6(1) to 6(6) are schematic diagrams illustrating steps of the movement of the shutter assembly 230 when the combiner 210 of the combiner system 20 of the embodiment moves from the accommodation position to the use position. Further, Figs. 7A to 7C are top views illustrating examples of the opening and closing state of the shutter assembly 230 of the combiner system 20 of the embodiment.

Similarly to Fig. 5, Fig. 6(1) illustrates a state where the combiner 210 is accommodated at the accommodation position and the shutter assembly is closed. In this state, the drive pin 222a of the combiner 210 is located at the point A as the driver seat side end of the drive rail 223a, and the posture pin 222b is similarly located at the point a as the driver seat side end of the posture rail 223b. At the position, the combiner 210 is laid in the substantially horizontal direction at the accommodation position lower than the use position and close to the driver seat so that the combiner is accommodated in the combiner accommodation portion. Further, as illustrated in Fig. 7A, both the first shutter 231 and the second shutter 232 are closed, and hence the entire area of the opening portion 234 is shielded.

When the combiner 210 moves from the accommodation position to the use position, the first shutter 231 is first opened as illustrated in Fig. 6(2). The first shutter 231 is opened when the first arm 235 rotates downward, and hence the area D of the opening portion 234 is opened. Accordingly, the first half of the movement path of the combiner 210 is ensured.

Then, the combiner 210 moves further so that the moving front end (the upper end in the use state) of the combiner 210 starts to be exposed upward from the area D as illustrated in Fig. 6(3). This state is substantially a state where the drive pin 222a is located at the point B and the posture pin 222b is located at the point b as illustrated in Fig. 4.

Next, as illustrated in Fig. 6(4), the second shutter 232 is opened. The second shutter 232 is opened due to the second arm 235 rotating toward the driver seat, and hence the area E of the opening portion 234 is opened. Accordingly, the entire movement path of the combiner 210 is ensured.

The combiner 210 moves further so that any portion of the combiner 210 also moves toward the driver seat and the upper part in relation to the position of the closed first shutter 231 and moves to a position not contacting the closed first shutter. Then, the first shutter 231 is closed as illustrated in Fig. 6(5). In the embodiment, the combiner 210 is located at the use position where the combiner is disposed in the substantially vertical state in the state illustrated in Fig. 6(5). This state is a state where the drive pin 222a is located at the point E1 and the posture pin 222b is located at the point e as illustrated in Fig. 4.

Further, the first shutter 231 can be closed in any state even when the combiner 210 does not reach the use position as long as any portion of the combiner 210 moves toward the driver seat or the upper part in relation to the position of the closed first shutter 231, that is, the combiner does not contact the closed first shutter.

The movement of the combiner 210 from the state of Fig. 6(1) to the state of Fig. 6(5) is automatically performed by a single operation signal. At this time, the first shutter 231 and the second shutter 232 are driven while being interlocked with the movement of the combiner 210.

When the combiner 210 is moved further from the state illustrated in Fig. 6(5), the angle of the reflection surface 210a of the combiner 210 can be inclined to the state illustrated in Fig. 6(6). This state is a state where the drive pin 222a is located at the point E2 and the posture pin 222b is located at the point e as illustrated in Fig. 4. Further, the position of the combiner 210 in the corresponding state is also included in the range of the use position.

The user can appropriately adjust the angle of the reflection surface 210a of the combiner 210 to a position best suitable for the user from the state illustrated in Fig. 6(5) to the state illustrated in Fig. 6(6). The user adjusts the combiner 210 to a position best suitable for the user by appropriately continuously pushing a fine adjustment button or appropriately rotating a fine adjustment knob after a series of movement of the combiner 210 from the state of Fig. 6(1) to the state of Fig. 6(5) ends. A configuration can be employed in which a best suitable position information item for the user is stored in a separate storage unit and the angle of the reflection surface 210a of the combiner 210 is adjusted to a best suitable position in response to the position information item read out from the storage unit in the use state.

Fig. 7B is a top view illustrating the periphery of the combiner 210 in the state illustrated in Fig. 6(6), and Fig. 7C is a top view illustrating a state where the combiner 210 is extracted from the state of Fig. 7B in order to describe the states of the first shutter 231 and the second shutter 232. When the combiner 210 is located at the use position, the first shutter 231 is closed. Then, when the angle of the reflection surface 210a of the combiner 210 is finely adjusted, only the area E for the movement of the combiner 210 is ensured, and hence only the second shutter 232 is opened. For that reason, the area of the opening portion of the dashboard surface 233 is set as small as possible. Since two shutters move in an interlocked manner, the opening portion can be narrowed within the range not contacting the combiner.

As described above, the combiner 210 moves from the accommodation position to the use position. In the above-described example, the second shutter 232 starts to be opened after the moving front end (the upper end in the use state) of the combiner 210 starts to be exposed upward from the area D (the state of Fig. 6(3)). However, the second shutter 232 may start to be opened before the exposure of the moving front end or at the same time when the first shutter 231 starts to be opened. Here, the timing at which the second shutter 232 starts to be opened is not limited as long as the second shutter 232 is opened before the combiner 210 enters the area E.

The movement process of the combiner 210 from the use position to the accommodation position is basically opposite to the description above. First, the combiner 210 of which the angle of the reflection surface 210a is adjusted is returned to the state illustrated in Fig. 6(5) (so as to be moved toward the driver seat) and the first shutter 231 is opened from the state illustrated in Fig. 6(5) to the state illustrated in Fig. 6(6). A mechanism for opening the first shutter 231 is similar to the mechanism described in the movement process from the accommodation position to the use position. Hereinafter, even the mechanism for opening and closing the first shutter 231 or the second shutter 232 is similar to the mechanism described in the movement process from the accommodation position to the use position. Then, the combiner 210 moves further so as to become the state illustrated in Fig. 6(4). The movement of the shutter can be arbitrarily set as long as the movement of the combiner is not disturbed.

Next, in the embodiment, the second shutter 232 is closed as illustrated in Fig. 6(3). Further, in the present invention, the second shutter 232 may be closed after any portion of the combiner 210 moves toward the lower part of the second shutter 232 or the front glass, that is, the combiner moves to a position not contacting the second shutter 232. For that reason, since the second shutter 232 may be closed before and after the first shutter 232 is closed or after the combiner 210 reaches the accommodation position, the timing for closing the second shutter 232 can be arbitrarily set.

In the embodiment, when the combiner 210 moves further so that the combiner 210 reaches the accommodation position, the first shutter 231 is closed. Further, in the present invention, the first shutter 231 may be closed after any portion of the combiner 210 moves to the lower part of the position of the closed first shutter 231, that is, the combiner moves to a position not contacting the first shutter 231. For that reason, since the first shutter 231 may be closed before or after the combiner 210 reaches the accommodation position similarly to the embodiment, the timing can be arbitrarily set.

According to the above-described combiner system of the embodiment, since the combiner accommodation portion accommodates the combiner 210 in the substantially horizontal direction at the accommodation position lower than the use position and close to the driver seat and the combiner accommodation portion is located in the vicinity of the dashboard having a comparatively allowable space so as not to protrude toward the lower part of the dashboard, the space efficiency is excellent. Further, since the combiner system of the embodiment is formed so as to move between the use position in the substantially vertical state and the accommodation position in the horizontal state while gradually changing the direction of the reflection surface (the visible-side surface) 210a toward the driver seat and the upper part, the opening portion as the movement path for the exposure of the combiner 210 can be decreased in size compared with the existing configuration in which the combiner is raised by the rotation from the accommodation position to the use position. As a result, the shutter assembly shielding the opening portion can be decreased in size or simplified in structure, and hence can be further decreased in cost.

Further, according to the combiner system of the embodiment, since the shutter assembly (the opening/closing shutter) 230 includes two shutters, that is, the closed first shutter 231 located near the front glass FG in relation to the combiner 210 and the closed second shutter 232 located at the lower part of the combiner 210 when the combiner 210 is located at the use position, the timing for opening and closing the shutter can be appropriately set and the entire opening portion 234 can be shielded when the combiner 210 is accommodated. Further, when two shutters as the first shutter 231 and the second shutter 232 are simultaneously controlled in an interlocked state, the opening area in the use state can be set as small as possible, and hence the intrusion of external dust or the UV ray of the sunlight can be strictly suppressed.

In the embodiment, both the first shutter 231 and the second shutter 232 are opened while rotating about the predetermined shafts (235a and 236a) parallel to the center of the reflection surface (the visible-side surface) 210a of the combiner 210. That is, both shutters are opened and closed while rotating in a direction perpendicular to the surface changing in the movement direction of the combiner. However, the shutter of the present invention is not limited to the configuration of the embodiment. For example, an existing shutter such as a slide type shutter or a winding type shutter can be employed. Any configuration can be employed as long as the movement of the combiner between the use position and the accommodation position is not disturbed and the opening is shielded when the shutter is closed.

However, when the shutter is opened and closed while rotating about a predetermined shaft as in the embodiment, a simple structure can be realized at low cost, the arrangement not disturbing the movement of the combiner between the use position and the accommodation position is easily designed, and the degree of freedom in design is high. Accordingly, the shutter is desirable. Further, the shutter is opened and closed smoothly and promptly. Even by this point, the shutter with the configuration of the embodiment is desirable.

In particular, the first shutter 231 of the embodiment opened and closed while rotating downward about the shaft parallel to the center of the reflection surface (the visible-side surface) 210a of the combiner 210 located near the driver seat in relation to the first shutter 231, that is, the shaft perpendicular to the surface changing in the movement direction of the combiner is promptly driven with a simple configuration, and the movement path of the combiner between the use position and the accommodation position is easily ensured. Accordingly, the shutter is desirable.

While the preferred embodiment and the modification of the present invention have been described, the combiner system of the present invention is not limited to the configuration of the embodiment and the modification.

For example, in the embodiment and the modification, a combination of the pair of guide members 224 and 224' and the pair of drive pins 222a and the pair of posture pins 222b moving while being respectively fitted to the pair of drive rails 223a and the pair of posture rails 223b provided in the pair of guide members 224 and 224' is exemplified as a mechanism for controlling the movement and the posture of the combiner, but the present invention is not limited to the configuration. Any configuration can be employed as long as the combiner moves between the use position and the accommodation position while gradually changing the direction of the visible-side surface toward the driver seat and the upper part. For example, the present invention can employ a configuration in which a slide mechanism capable of sliding a movement member journaled to the lower end of the combiner toward the driver seat and the front glass and a rotation mechanism capable of changing the posture of the combiner from the horizontal direction to the vertical direction by directly rotating the combiner about the rotation shaft corresponding to the shaft of the lower end of the combiner are used in combination in an interlocked manner in order to move the combiner.

Further, the combiner system of the present invention can be appropriately modified according to the knowledge of the person skilled in the art. Of course, even such a modification is included in the scope of the present invention as long as the configuration of the combiner system of the present invention is provided.

While the combiner system used in the vehicle has been described, the present invention can be used in the general display system in which the display device displaying an image is located at different positions as the use position and the accommodation position.

Specifically, the present invention can be also used in, for example, a game machine or a display system in which a display device is installed at a position easily seen from a user in a use state and is accommodated at a position not seen from the user in a non-use state.

### [Reference Signs List]

- 10: indicator
- 20: combiner system
- 210: combiner
- 210a: reflection surface (visible-side surface)
- 220: pop-up mechanism
- 221: combiner holding member
- 222a: drive pin
- 222b: posture pin
- 223a: drive rail
- 223b: posture rail
- 224, 224': guide member
- 230: shutter assembly (opening/closing shutter)
- 231: first shutter
- 232: second shutter
- 233: dashboard surface
- 234: opening portion
- 235: first arm
- 236: second arm

## Claims

1. A display system in which a display device displaying an image is located at different positions as a use position and an accommodation position, the display system comprising:
a first and a second shutters which are formed so that opening portions are wider than the display device,
wherein at least a part of the display device is located above the first and the second shutters and at least one of the first and the second shutters is closed when the display device is located at the use position.

2. The display system according to claim 1,
wherein the opening portions of the first and the second shutters are formed so that the opening portion of the first shutter is continuous to the opening portion of the second shutter.

3. The display system according to claim 2,
wherein the second shutter is opened and a part of the display device is located at the opening portion of the second shutter when the display device is located at the use position.

4. The display system according to claim 3,
wherein the display device is uprightly installed in the substantially vertical state when the display device is located at the use position.

5. The display system according to claim 4,
wherein the first shutter is closed when the display device is located at the use position.

6. The display system according to claim 5,
wherein an opening/closing direction of the first and the second shutters is substantially perpendicular to an upright installation direction of the display device when the display device is located at the use position.

7. The display system according to claim 6,
wherein the first and the second shutters are closed when the display device is located at the accommodation position.

8. The display system according to claim 7,
wherein the display device is located below the first shutter and the second shutter when the display device is located at the accommodation position.

9. The display system according to claim 8,
wherein the display device is accommodated while being laid in the substantiaily horizontal direction when the display device is located at the accommodation position.

10. The display system according to claim 9,
wherein the first shutter is opened earlier than the second shutter when the display device moves from the accommodation position to the use position.

11. The display system according to claim 10,
wherein the second shutter is closed earlier than the first shutter when the display device moves from the use position to the accommodation position.

12. The display system according to claim 1,
wherein at least one of the first shutter and the second shutter is opened and closed while rotating about a predetermined shaft.

13. The display system according to claim 1,
wherein the display device is a combiner which reflects a beam projected to a visible-side surface toward a user so that an image depicted by the beam is projected to the user's eye sight.

14. The display system according to claim 13,
wherein the display device is a combiner which reflects a beam projected to a visible-side surface toward a driver seat so that an image depicted by the beam is projected to an eye sight of a user sitting on the driver seat.
